# EUROPEAN PATENT SPECIFICATION

(11) **EP 2 802 787 B1**
(45) Date of publication and mention of the grant of the patent: **07.02.2018**
(21) Application number: 13705564.6
(22) Date of filing: 07.01.2013
(51) Int. Cl.: F16D 55/228, B22D 19/00

(54) **CORE AND TUBE ASSEMBLY FOR MAKING A HYDRAULIC CIRCUIT FOR A CALIPER OF A DISK BRAKE AND METHOD OF MAKING SAID ASSEMBLY**
KERN- UND ROHRANORDNUNG ZUR HERSTELLUNG EINER HYDRAULISCHEN SCHALTUNG FÜR EINEN BREMSSATTEL EINER SCHEIBENBREMSE SOWIE VERFAHREN ZUR HERSTELLUNG DER ANORDNUNG
ENSEMBLE NOYAU ET TUBE POUR LA FABRICATION D'UN CIRCUIT HYDRAULIQUE POUR UN ÉTRIER D'UN FREIN À DISQUE ET PROCÉDÉ DE FABRICATION DUDIT ENSEMBLE

(30) Priority: 09.01.2012 IT MI20120017
(43) Date of publication of application: 19.11.2014
(60) Divisional application: 15156449.9
(73) Proprietor: Freni Brembo S.p.A., 24035 Curno (Bergamo) (IT)
(72) Inventor: CRIPPA, Cristian, I-24035 Curno (Bergamo) (IT); CESANI, Paolo, I-24035 Curno (Bergamo) (IT); GOTTI, Antonio, I-24035 Curno (Bergamo) (IT)
(74) Representative: Crippa, Paolo Ernesto
(86) International application number: PCT/IB2013/050125
(87) International publication number: WO 2013/105010

(56) References cited:
- EP-A2- 0 907 034
- WO-A1-92/04999
- DE-A1-102009 002 057
- JP-A- 2 092 447
- JP-A- 2001 107 994

## Description

The present invention relates to an assembly of at least one core suitable for making at least two chambers for pistons or cylinders, arranged adjacent to one another on at least one side of a caliper for disc brake and at least one hollow tube delimiting a predefined inner cavity, said hollow tube forming a portion of duct to convey a brake fluid in the chambers for pistons or cylinders so as to affect the exit of a piston from each of said cylinders to affect pads suitable for abutting against a disc for a disc brake.

It is known to use a tube embedded in the material which the caliper body is made of during the casting thereof.

Prior solutions are known for example from GB-2052329 in the name of Automotive Production Co. or from JP2001-107994 **in** the name of Akebono Industries. Other prior art solutions are known from DE102009002057A1, WO9204999A1 and JP2092447A.

In particular, GB 2052329 discloses a disc brake caliper body in cast metal, in particular aluminium alloy, comprising an internal fluid duct having a non-rectilinear path defined by a tube bent to the required configuration, set into the caliper body as an insert in the casting and secured to the core for the casting thereof.

JP2001-107994 discloses the possibility of making a caliper body wherein the tube embedded inside the metal die is anchored in seats formed next to the cylinders so as to avoid interference caliper body wherein the tube embedded inside the metal die is anchored in seats formed next to the cylinders so as to avoid interference between such ends and the pistons.

Other solutions are known from JP 8290256 in the name of Hino Motors Ltd, in which the tube is used to make nozzles, or from JP 91 77843 in the name of Akebono Brake Industries in which a solution is presented to keep the tube in the correct position during the casting.

In more detail, JP 8290256 discloses a method for making of a passage for the fluid inside a nozzle support obtained by bending a tube in a material having a melting point higher than that of the nozzle support and keeping it embedded in the nozzle support during casting. The tube is positioned in a mould having the shape of the nozzle support and is fixed to the mould at its opposite ends.

As mentioned above, JP 91 77843 provides for the positioning of a tube on a cylindrical core forming a piston seat and the attachment of the two opposite ends to the mould, as well as envisaging the injection of pressurised air inside the tube during the casting.

A similar solution is known from EP 1 116 536 in the name of the Nippon Light Metal co and Sumitomo Sei Brake System Inc.

Such document discloses the insertion of the tube in the mould and its anchorage to the core. More in particular, it provides for the use of a control element having a control pin attached inside the mould, to be inserted in one end of the tube so that such pin supports the tube in a predefined position in the mould cavity or provides that the control element has a hole in which to insert the ends of the tube.

Solutions are also known for preventing sections of tube from moving during the casting, as described in EP 0 907034, but entail considerable construction complications with the additions of manufacturing steps and complications in the control of the tube in the core box.

In particular, such document discloses a caliper body having parallel cavities for pistons fitted in said cavities, wherein the cavities communicate by means of tubes embedded inside the caliper body and wherein such tubes have projections or recesses in a diametrical,direction between the cavities so as be kept in their longitudinal direction in relation to the caliper body.

In addition, the solution provided for by GB 2073633 proposes an alternative which does not however reduce the constructional complexity proposed in EP 0 907 034**.**

In fact, such solution provides for the insertion an attachment pin at the end of the tube to bend it in a radial direction to limit the rotation movement of the tube.

The Applicant has found an alternative solution to the state of the art so as to simplify the manufacturing process during the use of the caliper entering in the cylinders.

A further purpose is to shape the section of the hydraulic duct for the brake fluid placed between the two adjacent cylinders so as to facilitate the transit of the brake fluid.

These and further purposes and advantages are achieved by an assembly of at least one core and at least one hollow tube as described in claim 1 hereto attached and by a method of making the aforesaid assembly as described in claim 8.

According to a general embodiment of the present invention, an assembly of at least one core made of material for cores suitable for being removed after manufacture of the body cast on such core is provided, said at least one core being suitable for making at least two chambers for pistons or cylinders, arranged adjacent to one another on at least one side of a caliper for disc brake and at least one hollow tube delimiting a predefined inner cavity, said tube being made of a material suitable for preserving said inner cavity of a predefined shape even after the casting thereon of the material of which the caliper body is made, said hollow tube forming a portion of duct to convey a brake fluid in the chambers for pistons or cylinders so as to affect the exit of a piston from each of said cylinders to affect pads suitable for abutting against a disc for a disc brake, wherein at least an end portion of said hollow tube is arranged in a location of said core forming one of a material suitable for preserving said inner cavity of a predefined shape even after the casting thereon of the material of which the caliper body is made, said hollow tube forming a portion of duct to convey a brake fluid in the chambers for pistons or cylinders so as to affect the exit of a piston from each of said cylinders to affect pads suitable for abutting against a disc for a disc brake, wherein at least an end portion of said hollow tube is arranged in a location of said core forming one of said cylinders so that a second portion of said hollow tube exits from said core suitable for forming said cylinder moving away from the at least one pair of cylinders.

Advantageously, in said assembly of at least one core and at least one hollow tube, said core in the portions thereof forming said at least two cylinders arranged adjacent to one another forms a shaped core tube made of a material for cores suitable for being removed following the casting of the material which the caliper is made of, said core tube connecting the two portions of core forming said adjacent cylinders to make a portion of said duct to convey brake fluid into the cylinders.

Providing a core tube formed of the core in the portions forming the two adjacent cylinders entails the advantage of being easy to shape so as to present fittings and/or flarings so as to form a passage between the cylinders permitting a facilitated flow of the brake liquid therein and/or rapid regulation of the pressure of the brake fluid present in the two adjacent cylinders. Such core tube may form a suitably shaped duct in the caliper body. Such core tube is easy to shape ensuring a predefined fitting geometry in the hydraulic duct between the two adjacent cylinders.

In addition, envisaging a core tube in the portions forming the two adjacent cylinders entails the further advantage of simplifying the manufacturing process by reducing the number of sections of tube which enter the adjacent cylinders, in as much as otherwise such sections of tube would need to be cut subsequent to the casting process, thereby requiring further expensive manufacturing steps.

In particular, by contemporarily envisaging a hollow tube positioned so as to distance the two portions of core suitable for shaping two chambers for adjacent cylinders and a core tube duct in material for cores between these two core portions it is possible to contemporarily achieve the reduction and simplification of the manufacturing steps, increasing the precision thereof: on the one hand overcoming the need for continuous tubes to be present in the two core portions which greatly complicates the subsequent removal steps, and, in addition, providing a fluidic connection between the two adjacent chambers thus obtained which ensures an even more efficient compensation of the pressures between the two adjacent cylinders making for caliper performance closer to the design specifications than the solutions of the prior art.

In addition, a further advantage is the fact of being able to achieve an optimal geometry of the hydraulic duct between the two cylinders, thanks to the possibility of shaping the core tube as required, and thereby reducing the quantity of brake fluid needed to activate the pistons.

Further purposes, solutions and advantages are presented in the embodiments described below and claimed in the attached dependent claims.

Various embodiments of the invention will be described below by means of non-limiting examples, with reference in particular to the appended figures, wherein:

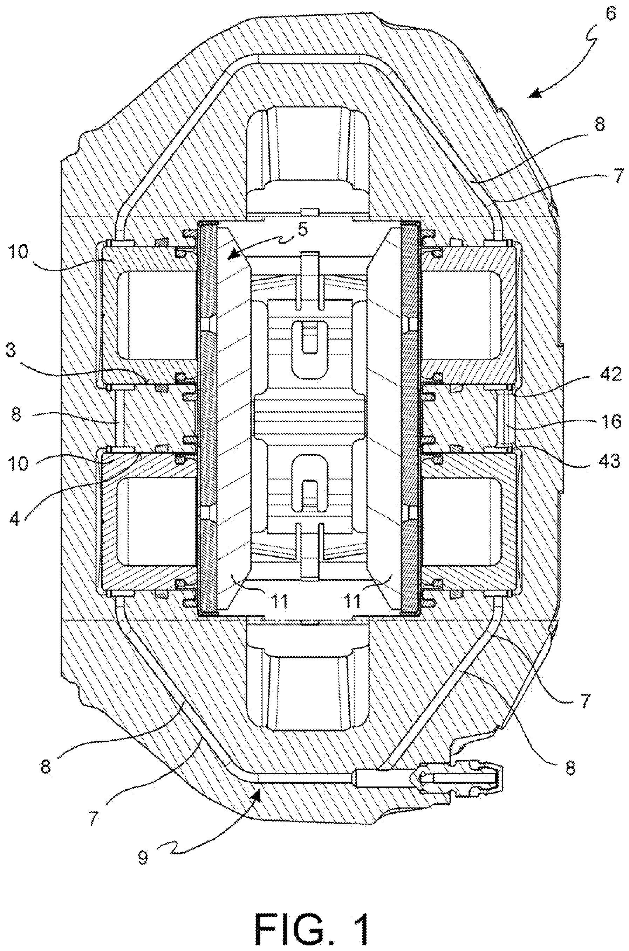

figure 1 shows a cross-section view of a caliper body obtained by means of an assembly according to the invention;

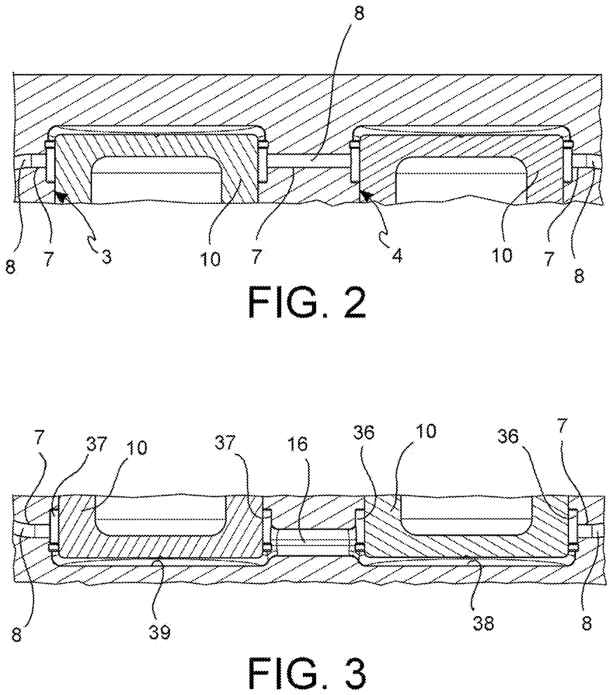

figures 2 and 3 show partial cross-sections of the caliper body comprising respectively several sections of hollow tube and a section of the duct conveying the brake fluid towards the piston chambers;

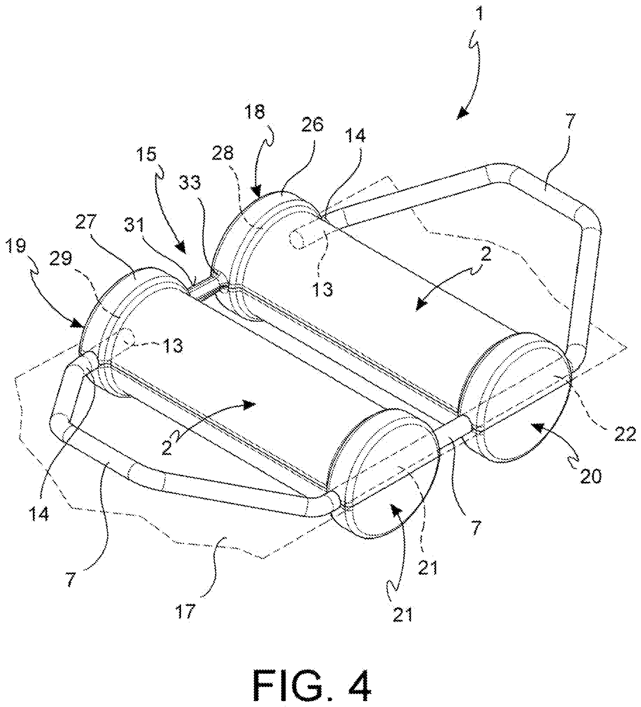

figure 4 shows a perspective view of an assembly according to the invention;

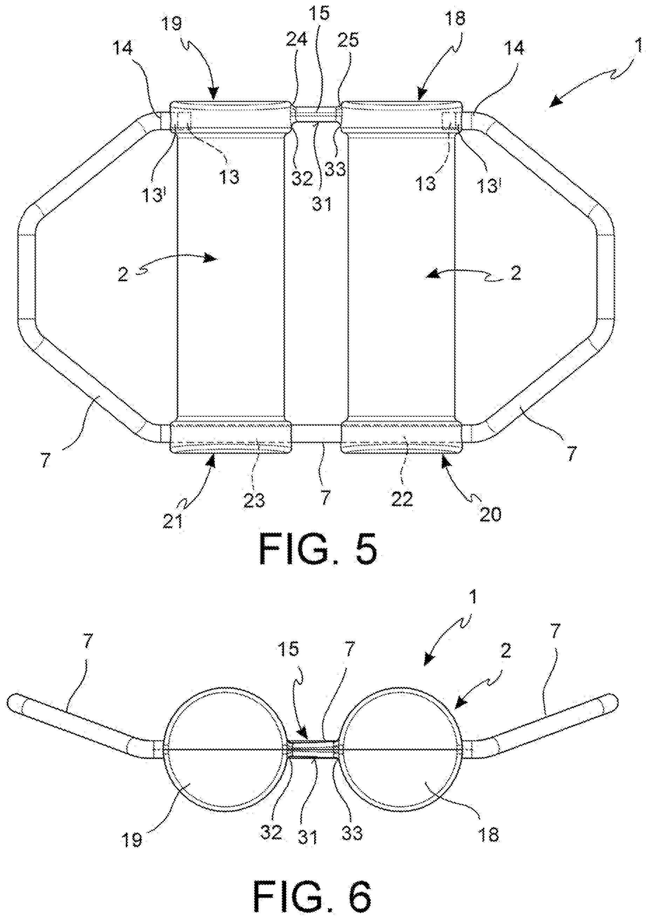

figures 5 and 6 respectively show a view from above and a front view of such assembly;

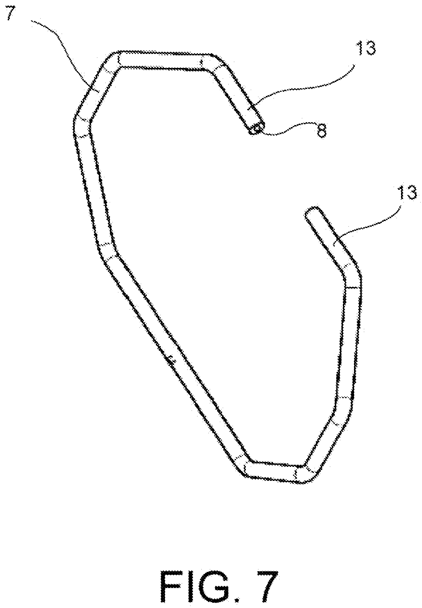

figure 7 shows a hollow tube of the aforesaid assembly;

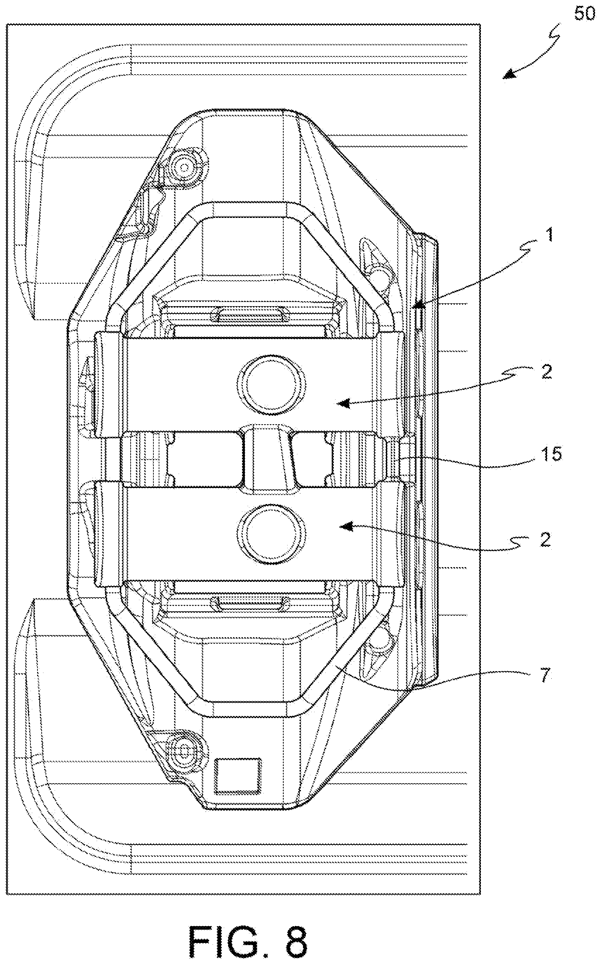

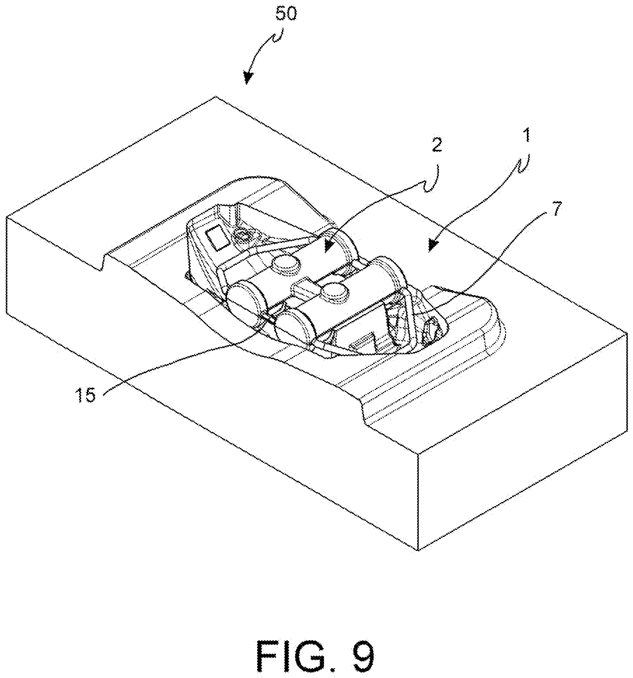

figures 8 and 9 respectively show a view from above and a perspective view of a shell mould inside which said the aforesaid assembly is placed;

With reference to the figures, an assembly of at least a core and at least a hollow tube according to the invention is globally denoted by reference numeral 1.

In a general embodiment of the present invention, the assembly 1 of at least one core 2 is made of material for cores suitable for being removed after manufacture, for example of the caliper body for disc brake. The at least one core is suitable for making at least two chambers for pistons or cylinders 3,4, arranged adjacent to one another on at least one side of a caliper for disc brake 6. The at least one hollow tube 7 delimits a predefined inner cavity 8 and is made of a material suitable for preserving said inner cavity 8 even after the high heat variation to which it is subjected on account of the casting on such hollow tube of the material of which the caliper body is made. Such hollow tube 7 forms a portion of duct 9 for conveying a brake fluid in the chambers for pistons or cylinders 3,4 so as to affect the exit of a piston 10 from each of the cylinders 3,4 to affect pads 11 suitable for abutting against a disc for a disc brake 12.

Advantageously, at least an end portion 13 of the hollow tube 7 is located in a position 18, 19 of said core 2 forming one of the cylinders 3 so that a second portion 14 of the hollow tube 7 exits from said core 2 suitable for forming said cylinder 3 moving away from the at least one pair of cylinders 3, 4.

In particular, the core 2 in the portions thereof forming the cylinders 3, 4 arranged adjacent to one another forms a shaped core tube 15 made of a material for cores suitable for being removed following the casting of the material which the caliper 6 is made of. The core tube 15 connecting the two portions 18, 19 of core 2 forming a portion of said duct 9 to convey brake fluid into the cylinders 3, 4.

In one embodiment of the present invention, the at least one hollow tube 7 comprises two sections of hollow tube 14 exiting from said portions 18, 19 of core 2 forming the adjacent cylinders, moving away from said core 2.

According to another embodiment, the at least one hollow tube 7 forms an open ring in a single piece exiting from one of said portions 18 of core 2 to form a cylinder 3 with a first end thereof and entering in an adjacent portion 19 of core 2 forming the adjacent cylinder 4 on the opposite part of the adjacent core portions with respect to said first end.

In one embodiment, the at least one hollow tube 7 comprises at least an intermediate section 22, 23 embedded in at least a respective portion 20, 21 of core suitable for forming other cylinders, such as opposite cylinders.

In one embodiment, the core tube 15 comprises an outer surface 31, which, when the core material is removed, forms the inner duct 16 on the caliper body 6, and therefore the surface which is lapped by the brake fluid.

In one embodiment, the core tube comprises a first end 24 and a second end 25 for connecting to the portions 18, 19 of core 2 and the outer surface 31 is joined to the portions 18, 19 by means of fittings 32, 33 with a predetermined joining radius.

In one embodiment, wherein the outer surface 31 comprises at least one frustoconical portion, for example, the section value of said frustoconical surface decreases moving away from at least one of said core portions 2 suitable for forming the chambers 3 and 4.

In one embodiment, the outer surface 31 forms two opposite frustums of cones, for example connected to each other.

In other, words, in one embodiment, the outer surface 31 comprises two adjacent frustoconical portions joined continuously at a respective shared lesser base thereof so that the core tube 15 has a decreasing transversal cross-section moving from said first end 24 toward said shared lesser base and increasing from said shared lesser base towards said second end 25.

According to one embodiment, on a mould release plane 17 comprising the two core portions 18 and 19 forming the

According to one embodiment, the core portions 18 and 19 comprise respective flared bottom portions 26 and 27 which extend next to the aforesaid end faces 28 and 29 to form corresponding annular recesses 36 and 37, such as undercuts, next to the bottom surfaces 38 and 39 in the chambers 3 and 4 of the caliper body 6. According to one embodiment, said annular recesses form localised widenings of the chamber, for example toroidal.

According to one embodiment, the hollow tube 7 enters or crosses such widened portions of bottom 26 and 27, for a portion 13 of predetermined length.
According to one embodiment, the hollow tube 7 enters the aforesaid widened portions of bottom 26 and 27, only for a portion 13' of length such as not to interfere with the stroke of the pistons 10 which will be housed in the chambers 3 and 4.

A caliper body 6 formed by casting material introduced in a shell-mould within which an assembly 1 of at least a core 2 and at least a hollow tube 7 is arranged, as described above, wherein the at least one tube 7 remains embedded within the caliper body 6, is provided.

According to a further embodiment, a method is provided for making an assembly 1 as described above, comprising a step of bending the at least one hollow tube 7 according to a predetermined shape to form a portion of a duct 9 to convey a brake fluid in the chambers for pistons or cylinders 3, 4, a further step of inserting said at least one hollow tube 7 in a core box suitable for forming corresponding annular recesses 36 and 37, such as undercuts, next to the bottom surfaces 38 and 39 in the chambers 3 and 4 of the caliper body 6. According to one embodiment, said annular recesses form localised widenings of the chamber, for example toroidal.

According to one embodiment, the hollow tube 7 enters or crosses such widened portions of bottom 26 and 27, for a portion 13 of predetermined length.
According to one embodiment, the hollow tube 7 enters the aforesaid widened portions of bottom 26 and 27, only for a portion 13' of length such as not to interfere with the stroke of the pistons 10 which will be housed in the chambers 3 and 4.

According to another embodiment, a caliper body 6 formed by casting material introduced in a shell-mould within which an assembly 1 of at least a core 2 and at least a hollow tube 7 is arranged, as described above, wherein the at least one tube 7 remains embedded within the caliper body 6, is provided.

According to a further embodiment, a method is provided for making an assembly 1 as described above, comprising a step of bending the at least one hollow tube 7 according to a predetermined shape to form a portion of a duct 9 to convey a brake fluid in the chambers for pistons or cylinders 3, 4, a further step of inserting said at least one hollow tube 7 in a core box suitable for forming said at least one core 2 so that said tube has at least the ends thereof embedded in portions of said core forming at least two adjacent cylinders, and yet a further step of injecting, in said core box, material for cores forming said core and in particular the core portions suitable for forming the chambers for the two adjacent cylinders and a duct connecting these two core portions suitable for forming the two adjacent cylinders.

According to one embodiment, the aforesaid method comprises a step of making in the core box, seats suitable for forming the widened bottom portions 26 and 27 of the core.

According to one embodiment, the aforesaid method provides making a cavity in the core box suitable for forming the core tube 15 connecting the core portions 18 and 19.

In one embodiment, such step of making a cavity in the core box suitable for forming the core tube 15, comprises a step of shaping such cavity according to the shape of the outer surface 31 of the core tube, and in particular but not necessarily, of connecting such cavity to further cavities of the core box suitable for forming the core portions 18 and 19, or in particular but not necessarily, of connecting such cavities with the seats suitable for forming the widened portions with a predetermined joining radius.

In one embodiment, such step of shaping cavities suitable for forming the core tube 15, comprises a step of the adjacent cylinders which is not affected by the stroke of the piston housed therein.

According to one embodiment, said section of hollow tube entering the adjacent cylinders which does not affect the stroke of the pistons, is not removed.

A person skilled in the art may make numerous modifications and adaptations to the preferred embodiment of the device described above, replacing elements with others functionally equivalent so as to satisfy contingent and specific requirements while remaining within the sphere of protection of the following claims.

A caliper body has at least two chambers 3 and 4 for pistons 10 or cylinders adjacent to one another and communicating through at least an inner duct 16 suitable for the passage of brake fluid and wherein from said chambers 3 and 4 at least two other hollow ducts 7 for brake fluid exit which move away from said chambers 3 and 4. Advantageously, said inner duct 16 has at least one frusto-conically shaped section and said hollow ducts have sections 14 next to the adjacent chambers 3 and 4 having a substantially cylindrical shape.

Said inner duct 16 has a decreasing cross-section as it moves away from each of said adjacent chambers. According to one embodiment, said inner duct 16 has two opposite frustoconical portions. According to one embodiment, said inner duct 16 has rounded fitting sections 42 and 43 to the chamber 3 and 4.

pistons or cylinders.

According to one embodiment, the at least one hollow tube exits with one of its end sections into a widened bottom portion of the adjacent cylinders which is not affected by the stroke of the piston housed therein.

According to one embodiment, said section of hollow tube entering the adjacent cylinders which does not affect the stroke of the pistons, is not removed.

A person skilled in the art may make numerous modifications and adaptations to the preferred embodiment of the device described above, replacing elements with others functionally equivalent so as to satisfy contingent and specific requirements while remaining within the sphere of protection of the following claims.

According to one embodiment, a caliper body has at least two chambers 3 and 4 for pistons 10 or cylinders adjacent to one another and communicating through at least an inner duct 16 suitable for the passage of brake fluid and wherein from said chambers 3 and 4 at least two other hollow ducts 7 for brake fluid exit which move away from said chambers 3 and 4. Advantageously, said inner duct 16 has at least one frusto-conically shaped section and said hollow ducts have sections 14 next to the adjacent chambers 3 and 4 having a substantially cylindrical shape.

According to one embodiment, said inner duct 16 has a manufacturing process by reducing the number of sections of tube which enter the adjacent cylinders, in as much as otherwise such sections of tube would need to be cut subsequent to the casting process, thereby requiring further expensive manufacturing steps.

A further advantage is that, by being able to achieve an optimal geometry of the hydraulic duct between the two cylinders, thanks to the possibility of shaping the core tube as required, it is possible to reduce the quantity of brake fluid needed to activate the pistons.

such as to form a passage between the cylinders enabling a facilitated flow of the brake liquid therein. Such core tube may form a suitably shaped duct in the caliper body. Such core tube is easy to shape ensuring a predetermined geometry of the fitting in the hydraulic duct between the two adjacent cylinders.

The presence of the core tube in the portions forming the two adjacent cylinders entails the further advantage of simplifying the manufacturing process by reducing the number of sections of tube which enter the adjacent cylinders, in as much as otherwise such sections of tube would need to be cut subsequent to the casting process, thereby requiring further expensive manufacturing steps.

A further advantage of the present invention is that, by being able to achieve an optimal geometry of the hydraulic duct between the two cylinders, thanks to the possibility of shaping the core tube as required, it is possible to reduce the quantity of brake fluid needed to activate the pistons.

## Claims

1. Assembly (1) of at least one core (2) made of material for cores suitable for being removed after manufacture, said at least one core being suitable for making at least two chambers (3, 4) for pistons, or cylinders, arranged adjacent to one another on at least a side (5) of a caliper for disc brake (6) and of at least a hollow tube (7) delimiting a predefined inner cavity (8), said tube being made of a material suitable for preserving said inner cavity (8) of a predefined shape even after the casting on this tube of the material of which the caliper body is made, said hollow tube (7) forming a duct portion (9) to convey a brake fluid in the chambers for pistons, or cylinders (3, 4) so as to affect the exit of a piston (10) from each of said cylinders (3, 4) to affect pads (11) suitable for abutting against a disc for a disc brake (12), wherein
- at least an end portion (13) of said hollow tube (7) is arranged in a portion (18, 19) of said core (2) forming one of said cylinders (3) so that a second portion (14) of said hollow tube (7) exits from said core (2) suitable for forming said cylinder (3) moving away from the at least two chambers (3, 4) for pistons or cylinders, and wherein
- said core (2) in the portions thereof forming said at least two cylinders (3, 4) arranged adjacent to one another forms a shaped core tube (15) made of a material for cores suitable for being removed following the casting of the material which the caliper (6) is made of, said core tube (15) connecting the two adjacent portions (18, 19) of core (2) forming an inner duct (16) belonging to said duct (9) to convey brake fluid into the cylinders (3, 4),
**characterised in that**
said at least one hollow tube (7) forms an open ring in a single piece exiting from one of said adjacent portions (18, 19) of core (2) to form a cylinder (3) with a first end thereof and enters in an adjacent portion (19) of core (2) forming the adjacent cylinder (4) on the opposite part of the adjacent core portions with respect to said first end.

2. Assembly (1), according to claim 1, wherein said at least one hollow tube (7) comprises two sections of hollow tube (14) exiting from said adjacent portions (18, 19) of core (2) forming the adjacent cylinders, moving away from said core (2).

3. Assembly (1), according to any one of the previous claims, wherein said at least one hollow tube (7) forms an open ring in a single piece having a first and a second end having a first and a second hollow tube aperture, wherein said first aperture of said first end faces said second aperture of said second end.

4. Assembly, according to any one of the previous claims, wherein said core tube (15) comprises an outer surface (31) and a first end (24) and a second end (25) for connecting to said adjacent portions (18, 19) of core (2), wherein said outer surface (31) is at least in part frustoconical.

5. Assembly, according to any one of the previous claims, wherein said at least one hollow tube (7) comprises at least an intermediate section (22, 23) embedded in at least a respective portion (20, 21) of core suitable for forming other cylinders.

6. Assembly, according to any one of claims from 1 to 3, wherein said core tube (15) comprises an outer surface (31) and a first end (24) and a second end (25) for connecting to said adjacent portions (18, 19) of core (2), wherein said outer surface (31) is at least in part frustoconical, and wherein the section value of said frustoconical surface decreases moving away from at least one cylinder.

7. Assembly, according to any one of claims from 1 to 3, wherein said core tube (15) comprises an outer surface (31) and a first end (24) and a second end (25) for connecting to said portions (18, 19) of core (2), wherein said outer surface (31) is at least in part frustoconical, and wherein said frustoconical surface forms two opposite frustums of cones preferably but not necessarily joined to each other.

8. Assembly, according to any one of claims from 1 to 3, wherein said core tube (15) comprises an outer surface (31) and a first end (24) and a second end (25) for connecting to said portions (18, 19) of core (2), wherein said outer surface (31) is at least in part frustoconical,wherein said core tube (15) comprises an outer surface (31) and a first end (24) and a second end (25) for connecting to said adjacent portions (18, 19) of core (2),said outer surface (31) being joined to said portions (18, 19) through fittings (32, 33) with a predetermined joining radius.

9. Method for making an assembly (1) having the characteristics of any one of claims from 1 to 5, comprising the following steps:
- bending said at least one hollow tube (7) according to a predetermined shape to form a portion of a duct (9) to convey a brake fluid in the chambers (3, 4) for pistons or cylinders;
- inserting said at least one hollow tube (7) in a core box suitable for forming said at least one core (2) so that said tube has at least the ends thereof embedded in portions of said core forming at least two adjacent cylinders;
- injecting, in said core box, material for cores forming said core and in particular said two adjacent cylinders.

10. Method for making a caliper body (6), according to claim 9, comprising a step of inner turning or milling said chambers for pistons or cylinders (3, 4), so as to remove also sections (13, 22, 23) of said at least one hollow tube (7) penetrating inside said chambers (3, 4) for making said chambers communicate with said at least one tube preventing said at least one tube from interfering with said pistons or cylinders.

## Patentansprüche

1. Anordnung (1) von zumindest einem Kern (2), der aus Material für Kerne hergestellt ist, das zur Entfernung nach der Herstellung geeignet ist, wobei der zumindest eine Kern dazu geeignet ist, zumindest zwei Kammern (3, 4) für Kolben oder Zylinder herzustellen, die an zumindest einer Seite (5) eines Bremssattels für eine Scheibenbremse (6) einander benachbart angeordnet sind, und von zumindest einem hohlen Rohr (7) einen vordefinierten Innenraum (8) begrenzt, wobei das Rohr aus einem Material hergestellt ist, das dazu geeignet ist, den Innenraum (8) mit vordefinierter Form nach dem Gießen dieses Rohrs aus dem Material, aus dem der Bremssattelkörper hergestellt ist, beizubehalten, wobei das hohle Rohr (7) einen Leitungsabschnitt (9) bildet, um Bremsfluid in die Kammern für Kolben oder Zylinder (3, 4) zu leiten, um den Austritt eines Kolbens (10) aus jedem der Zylinder (3, 4) zu bewirken, um auf Bremsklötze zu wirken, die zur Abstützung gegen eine Scheibe einer Scheibenbremse (12) geeignet sind, wobei
- zumindest ein Endabschnitt (13) des hohlen Rohrs (7) in einem Abschnitt (18, 19) des Kerns (2) angeordnet ist, der einen der Zylinder (3) bildet, so dass ein zweiter Abschnitt (14) des hohlen Rohrs (7) aus dem Kern (2), der zur Bildung des Zylinder (3) geeignet ist, von den zumindest zwei Kammern (3, 4) für Kolben oder Zylinder weggehend austritt, und wobei
- der Kern (2) in seinen Abschnitten, die die zumindest zwei einander benachbart angeordneten Zylinder (3, 4) bilden, ein geformtes Kernrohr (15) bildet, das aus Material für Kerne hergestellt ist, das zur Entfernung nach dem Gießen des Materials, aus dem der Bremssattel (6) hergestellt ist, geeignet ist, wobei das Kernrohr (15), das die zwei einander benachbarten Abschnitte (18, 19) des Kerns (2) verbindet, eine innere Leitung (16) bildet, die zu der Leitung (9) gehört, um Bremsfluid in die Zylinder (3, 4) zu leiten,
**dadurch gekennzeichnet, dass**
das zumindest eine hohle Rohr (7) einen einstückigen offenen Ring bildet, der aus einem der benachbarten Abschnitte (18, 19) des Kerns (2) austritt, um mit seinem ersten Ende einen Zylinder (3) zu bilden, und in einen benachbarten Abschnitt (19) des Kerns (2), der den benachbarten Zylinder (4) bildet, an dem in Bezug auf das erste Ende gegenüberliegenden Teil der benachbarten Kernabschnitte eintritt.

2. Anordnung (1) nach Anspruch 1, wobei das zumindest eine hohle Rohr (7) zwei hohle Rohrabschnitte (14) aufweist, die von den benachbarten Abschnitten (18, 19) des Kerns (2), die die benachbarten Zylinder bilden, von dem Kern (2) weggehend austreten.

3. Anordnung (1) nach einem der vorhergehenden Ansprüche, wobei das zumindest eine hohle Rohr (7) einen einstückigen offenen Ring mit einem ersten und einem zweiten Ende bildet, die eine erste und eine zweite hohle Rohröffnung aufweisen, wobei die erste Öffnung des ersten Endes zu der zweiten Öffnung des zweiten Endes weist.

4. Anordnung (1) nach einem der vorhergehenden Ansprüche, wobei das Kernrohr (15) eine Außenoberfläche (31) und ein erstes Ende (24) und ein zweites Ende (25) zum Verbinden der benachbarten Abschnitte (18, 19) des Kerns (2) aufweist, wobei die Außenoberfläche (31) zumindest teilweise kegelstumpfförmig ist.

5. Anordnung (1) nach einem der vorhergehenden Ansprüche, wobei das zumindest eine hohle Rohr (7) zumindest einen Zwischenabschnitt (22, 23) aufweist, der in zumindest einem jeweiligen Abschnitt (20, 21) des Kerns eingebettet ist, der zur Bildung anderer Zylinder geeignet ist.

6. Anordnung (1) nach einem der Ansprüche 1 bis 3, wobei das Kernrohr (15) eine Außenoberfläche (31) und ein erstes Ende (24) und ein zweites Ende (25) zum Verbinden der benachbarten Abschnitte (18, 19) des Kerns (2) aufweist, wobei die Außenoberfläche (31) zumindest teilweise kegelstumpfförmig ist, und wobei ein Querschnittswert der kegelstumpfförmigen Oberfläche von dem zumindest einen Zylinder weggehend abnimmt.

7. Anordnung (1) nach einem der Ansprüche 1 bis 3, wobei das Kernrohr (15) eine Außenoberfläche (31) und ein erstes Ende (24) und ein zweites Ende (25) zum Verbinden der Abschnitte (18, 19) des Kerns (2) aufweist, wobei die Außenoberfläche (31) zumindest teilweise kegelstumpfförmig ist, und wobei die Kegelstumpfoberfläche (2) gegenüberliegende Kegelstümpfe bildet, die bevorzugt, aber nicht notwendigerweise, miteinander verbunden sind.

8. Anordnung nach einem der Ansprüche 1 bis 3, wobei das Kernrohr (15) eine Außenoberfläche (31) und ein erstes Ende (24) und ein zweites Ende (25) zum Verbinden der Abschnitte (18, 19) des Kerns aufweist, wobei die Außenoberfläche (31) zumindest teilweise kegelstumpfförmig ist, wobei das Kernrohr (15) eine Außenoberfläche (31) und ein erstes Ende (24) und ein zweites Ende (25) zum Verbinden der benachbarten Abschnitte (18, 19) des Kerns aufweist, wobei die Außenoberfläche (31) mit den Abschnitten (18, 19) durch Anschlüsse (32, 31) mit einem vorbestimmten Verbindungsradius verbunden sind.

9. Verfahren zur Herstellung einer Anordnung (1) mit den Kennzeichen von einem der Ansprüche 1 bis 5, welches die folgenden Schritte aufweist:
- Biegen des zumindest einen hohlen Rohrs (7) gemäß einer vorbestimmten Form zur Bildung eines Abschnitts einer Leitung (9), um ein Bremsfluid in den Kammern (3, 4) für Kolben oder Zylinder zu leiten;
- Einsetzen des zumindest einen hohlen Rohrs (7) in einem Kernkasten, der zur Formung des zumindest einen Kerns (2) geeignet ist, so dass zumindest die Enden des Rohrs in Abschnitte des Kerns eingebettet sind, die zumindest zwei benachbarte Zylinder bilden;
- Einspritzen von Material für Kerne in den Kernkasten, wobei der Kern und insbesondere die zwei benachbarten Zylinder gebildet werden.

10. Verfahren zur Herstellung eines Bremssattelkörpers (6) nach Anspruch 9, das einen Schritt aufweist, die Kammern für Kolben oder Zylinder (3, 4) zu drehen oder zu fräsen, um auch Abschnitte (13, 22, 23) des zumindest einen hohlen Rohrs (7) zu entfernen, die in die Kammern (3, 4) eindringen, zur Herstellung der Kammern, die mit dem zumindest einen Rohr in Verbindung stehen, wobei verhindert wird, dass sich das zumindest eine Rohr mit den Kolben oder Zylindern stört.

## Revendications

1. Ensemble (1) d'au moins un noyau (2) fait d'une matière pour noyaux appropriée pour être retirée après la fabrication, ledit au moins un noyau étant approprié pour former au moins deux chambres (3, 4) pour pistons, ou cylindres, disposées adjacentes l'une à l'autre, sur au moins un côté (5) d'un étrier pour frein à disque (6) et au moins un tube creux (7) délimitant une cavité intérieure prédéfinie (8), ledit tube étant fait d'une matière appropriée pour préserver ladite cavité intérieure (8) d'une forme prédéfinie, même après la coulée sur ce tube de la matière dont le corps d'étrier est fait, ledit tube creux (7) formant une portion de conduit (9) pour transporter un fluide de frein dans les chambres pour pistons, ou cylindres (3, 4) de façon à avoir une incidence sur la sortie d'un piston (10) de chacun desdits cylindres (3, 4) pour avoir une incidence sur les patins (11) appropriés pour buter contre un disque de frein à disque (12), dans lequel
- au moins une portion terminale (13) dudit tube creux (7) est disposée dans une portion (18, 19) dudit noyau (2) formant un desdits cylindres (3) de telle sorte qu'une seconde portion (14) dudit tube creux (7) sort dudit noyau (2) approprié pour former ledit cylindre (3) en s'éloignant des au moins deux chambres (3, 4) pour pistons ou cylindres, et dans lequel
- ledit noyau (2) dans ses portions formant lesdits au moins deux cylindres (3, 4) disposés adjacents l'un à l'autre, forme un tube de noyau en forme (15) fait d'une matière pour noyaux appropriée pour être retirée après la coulée de la matière dont l'étrier (6) est fait, ledit tube de noyau (15) reliant les deux portions adjacentes (18, 19) de noyau (2) formant un conduit intérieur (16) appartenant audit conduit (9) pour acheminer le fluide de frein dans les cylindres (3,4),
**caractérisé en ce que**
**que** ledit au moins un tube creux (7) forme un anneau ouvert d'une seule pièce sortant d'une desdites portions adjacentes (18, 19) de noyau (2) pour former un cylindre (3) avec une première extrémité de celui-ci et pénètre dans une portion adjacente (19) de noyau (2) formant le cylindre adjacent (4) sur la partie opposée des portions de noyau adjacentes par rapport à ladite première extrémité.

2. Ensemble (1), selon la revendication 1, dans lequel ledit au moins un tube creux (7) comprend deux sections de tube creux (14) sortant desdites portions adjacentes (18, 19) de noyau (2) formant les cylindres adjacents, en s'éloignant dudit noyau (2).

3. Ensemble (1), selon l'une quelconque des revendications précédentes, dans lequel ledit au moins un tube creux (7) forme un anneau ouvert d'une seule pièce ayant une première et une deuxième extrémité ayant une première et une deuxième ouverture de tube creux, dans lequel ladite première ouverture de ladite première extrémité fait face à ladite deuxième ouverture de ladite deuxième extrémité.

4. Ensemble, selon l'une quelconque des revendications précédentes, dans lequel ledit tube de noyau (15) comprend une surface extérieure (31) et une première extrémité (24) et une deuxième extrémité (25) pour la liaison auxdites portions adjacentes (18, 19) de noyau (2), dans lequel ladite surface extérieure (31) est au moins en partie tronconique.

5. Ensemble, selon l'une quelconque des revendications précédentes, dans lequel ledit au moins un tube creux (7) comprend au moins une section intermédiaire (22, 23) insérée dans au moins une portion respective (20, 21) de noyau appropriée pour former d'autres cylindres.

6. Ensemble, selon l'une quelconque des revendications 1 à 3, dans lequel ledit tube de noyau (15) comprend une surface extérieure (31) et une première extrémité (24) et une deuxième extrémité (25) pour la liaison auxdites portions (18, 19) de noyau (2), dans lequel ladite surface extérieure (31) est au moins en partie tronconique, et dans lequel la valeur de section de ladite surface tronconique diminue en s'éloignant d'au moins un cylindre.

7. Ensemble, selon l'une quelconque des revendications 1 à 3, dans lequel ledit tube de noyau (15) comprend une surface extérieure (31) et une première extrémité (24) et une deuxième extrémité (25) pour la liaison auxdites portions (18, 19) de noyau (2), dans lequel ladite surface extérieure (31) est au moins en partie tronconique, et dans lequel ladite surface tronconique forme deux troncs de cônes opposés de préférence mais pas nécessairement reliés l'un à l'autre.

8. Ensemble, selon l'une quelconque des revendications 1 à 3, dans lequel ledit tube de noyau (15) comprend une surface extérieure (31) et une première extrémité (24) et une deuxième extrémité (25) pour la liaison auxdites portions (18, 19) de noyau (2), dans lequel ladite surface extérieure (31) est au moins en partie tronconique, dans lequel ledit tube de noyau (15) comprend une surface extérieure (31) et une première extrémité (24) et une deuxième extrémité (25) pour la liaison auxdites portions adjacentes (18, 19) de noyau (2), ladite surface extérieure (31) étant assemblée auxdites portions (18, 19) par des raccords (32, 33) avec un rayon d'assemblage prédéterminé.

9. Procédé de fabrication d'un ensemble (1) ayant les caractéristiques selon l'une quelconque des revendications 1 à 5, comprenant les étapes suivantes :
- pliage dudit au moins un tube creux (7) selon une forme prédéterminée pour former une portion d'un conduit (9) pour acheminer un fluide de frein dans les chambres (3, 4) pour pistons ou cylindres ;
- insertion dudit au moins un tube creux (7) dans une boîte de noyau appropriée pour former ledit au moins un noyau (2) de sorte que ledit tube a au moins ses extrémités intégrées dans des portions dudit noyau formant au moins deux cylindres adjacents ;
- injection, dans ladite boîte de noyau, de matière pour noyaux formant ledit noyau et en particulier lesdits deux cylindres adjacents.

10. Procédé de fabrication d'un corps étrier (6), selon la revendication 9, comprenant une étape de rotation ou de fraisage internes desdites chambres pour pistons ou cylindres (3, 4), de façon à retirer également des sections (13, 22, 23) dudit au moins un tube creux (7) pénétrant à l'intérieur desdites chambres (3, 4) pour faire communiquer lesdites chambres avec ledit au moins un tube empêchant ledit au moins un tube d'interférer avec lesdits pistons ou cylindres.
